(19) **Europäisches Patentamt**

**European Patent Office**

**Office européen des brevets**

(11) **EP 0 934 860 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(51) Int Cl.:
*B60T 8/88* *(2006.01)*  *B60T 17/22* *(2006.01)*

(21) Anmeldenummer: **98122486.8**

(22) Anmeldetag: **27.11.1998**

(54) **Schaltungsanordnung für die Überwachung eines getakteten Verbrauchers**

Circuit arrangement for controlling of a clocked load

Agencement de circuit pour le contrôle d'un consommateur cadencé

(84) Benannte Vertragsstaaten:
**DE FR GB**

(30) Priorität: **05.02.1998 DE 19804407**

(43) Veröffentlichungstag der Anmeldung:
**11.08.1999 Patentblatt 1999/32**

(73) Patentinhaber: **ROBERT BOSCH GMBH**
**70442 Stuttgart (DE)**

(72) Erfinder: **Lohmueller, Horst**
**72144 Dusslingen (DE)**

(56) Entgegenhaltungen:
**US-A- 4 421 361**  **US-A- 4 980 832**
**US-A- 5 189 379**  **US-A- 5 648 759**
**US-A- 5 680 265**

**Beschreibung**

Stand der Technik

Die Erfindung betrifft eine Schaltungsanordnung für die Überwachung eines mit einem Taktsignal betriebenen Verbrauchers, wobei für die Überwachung ein Verbrauchersignal verwendet wird. Die Erfindung ist insbesondere einsetzbar auf dem Gebiet der Kraftfahrzeug-Elektronik.

In vielen Bereichen wird aus Energiebilanzgründen zunehmend auf getaktete Systeme zurückgegriffen. Dies gilt insbesondere für den Kraftfahrzeug-Bereich und dabei wiederum insbesondere für den Betrieb induktiver Lasten. Ebenso ist es in vielen Bereichen unabdingbar oder zumindest vorteilhaft, diese getakteten Systeme während ihres Betriebes zu überwachen. Entsprechende Überwachungssysteme und Schaltungsanordnungen für die Überwachung sind aus dem Stand der Technik in einer großen Vielfalt bekannt, bspw. werden in U. Tietze und Ch. Schenk: "Halbleiter-Schaltungstechnik", Springer-Verlag, Berlin, Heidelberg, New York, zahlreiche elektronische Grundschaltungen beschrieben.

An dieser Stelle sei auf das Kapitel "Schaltwerke (Sequentielle Logik)" auf den Seiten 232 ff. der 10. Auflage des vorstehend erwähnten Buches verwiesen. Auf S. 234 f. ist als Beispiel für eine Grundschaltung ein D-Flip-Flop beschrieben.

Als getaktete Systeme in denen die erfindungsgemäße Schaltungsanordnung zum Einsatz kommen kann, seien exemplarisch die in Kraftfahrzeugen implementialen Bremsanlagen erwähnt. Diesbezüglich sei die DE 195 46 682 A1, die eine hydraulische Bremsanlage zur Durchführung eines fahrerunabhängigen und radselektiven Bremseneingriffes zeigt, bzw. die DE 195 29 363 A1, die eine hydraulische Bremsanlage eines ABSR-Systems zeigt, als Stand der Technik genannt

US 5 648 759 A1 beschreibt den Oberbegriff des Anspruchs 1.

Selbstverständlich ist der Einsatz der erfindungsgemäßen Schaltungsanordnung in einer pneumatischen Bremsanlage auch denkbar.

Problematisch hinsichtlich einer Überwachung eines getakteten Verbrauchers ist dabei, dass ein für die Überwachung verwendetes Verbrauchersignal ebenfalls als getaktetes Signal vorliegt. Bei den bekannten Anordnungen wird daher das zu überwachende, getaktete Verbrauchersignal an einen Eingang eines Mikrocomputers oder Mikrocontrollers angeschlossen. Der Mikrocomputer prüft dann bei jeder aktiven Taktphase, ob das zu überwachende, getaktete Verbrauchersignal den geforderten Wert erfüllt.

Ein Nachteil der bekannten Anordnungen ist, dass für die Überwachung des getakteten Verbrauchersignals entsprechend schnelle Eingänge des Mikrocomputers bereitgestellt werden müssen. Der Mikrocomputer muss während jeder aktiven Taktphase, die ggf. sehr kurz sein kann, überprüfen, ob das anliegende, getaktete Verbrauchersignal einen vorgegebenen Wert erfüllt. Dies erfordert einen hohen schaltungstechnischen Aufwand. Entsprechend sind derartige Überwachungssysteme nur aufwendig und kostenintensiv realisierbar. Weiterhin ist von Nachteil, dass derartige Überwachungsanordnungen aufgrund der erforderlichen hohen Verarbeitungsgeschwindigkeit eine große Leistungsaufnahme aufweisen.

Der Erfindung liegt daher das Problem zugrunde, eine Schaltungsanordnung für die Überwachung eines mit einem Taktsignal betriebenen Verbrauchers bereitzustellen, die einfach und kostengünstig aufgebaut ist, und die zuverlässig auch bei kurzen aktiven Taktphasen eine Überwachung des Verbrauchers gewährleistet.

Das Problem wird durch die in den unabhängigen Patentansprüchen offenbarte Schaltungsanordnung und Verwendung gelöst. Besondere Ausführungsarten der Erfindung sind in den Unteransprüchen offenbart.

Das Problem ist bei einer Schaltungsanordnung für die Überwachung eines mit einem Taktsignal betriebenen Verbrauchers gelöst durch einen Komparator mit mindestens zwei Eingängen und einem Ausgang, und einem D-Flip-Flop mit einem Takt-Eingang, einem Signal-Eingang und einem Ausgang, wobei mindestens ein erster Eingang des Komparators mit dem Verbrauchersignal gekoppelt ist, und wobei der Ausgang des Komparators mit dem Signal-Eingang des D-Flip-Flops gekoppelt ist, der Takt-Eingang des D-Flip-Flops mit dem Takt-Signal gekoppelt ist, und der Ausgang des D-Flip-Flops ein Überwachungssignal ausgibt. Vorteilhaft bei dieser Schaltungsanordnung ist, dass sie mit minimalem schaltungstechnischen Aufwand ein quasi-statisches Überwachungssignal für den Fehlerfall und den fehlerfreien Betrieb bereitstellt. Damit kann das Erfordernis der Bereitstellung eines schnellen Mikrocomputer-Eingangs entfallen. Aufgrund der Charakteristik des D-Flip-Flops reagiert die erfindungsgemäße Schaltungsanordnung nur während der aktiven Taktphasen auf das anliegende Eingangssignal, nämlich das zu überwachende, getaktete Verbrauchersignal. Am Ausgang des D-Flip-Flop wird ein quasistationäres Logiksignal ausgegeben, welches entsprechend dem Vorliegen eines Fehlers den Wert einer logischen Eins oder einer logischen Null einnimmt. Weiterhin ist vorteilhaft, dass die Schaltungsanordung inhärent während jeder Phase des Taktsignals prüft, ob ein Fehler vorliegt oder nicht. Insbesondere ist die Schaltungsanordnung in der Lage, ein in Folge eines aufgetretenen Fehlers bspw. zu logisch Eins gesetztes Ausgangssignal zurückzusetzen, wenn in einem nachfolgenden Takt der Fehler nicht mehr auftritt. Das Setzen bzw. Rücksetzen des Ausgangssignals erfolgt somit automatisch entsprechend dem Vorliegen eines Fehlerfalles bzw. dem Vorliegen eines normalen Betriebszustandes. Das von der Schaltungsanordnung bereitgestellte Ausgangssignal kann von einem Steuergerät oder einem Mikrocomputer weiter verarbeitet werden.

Die Weiterverarbeitung kann bei einer Bremsanlage beispielsweise folgendermaßen aussehen: Für den Fall, daß das Ausgangssignal einen Fehler anzeigt, kann die entsprechende Funktion, die vom Steuergerät realisiert wird, und für die der überwachte Verbraucher, in diesem Fall das Ventil, erforderlich, jedoch fehlerhaft ist, abgeschalten werden. Ebenso kann das Steuergerät auch in einen sogenannten Notbetrieb gehen.

In einer besonderen Ausführungsart der Erfindung liegt an einem zweiten Eingang des Komparators ein Referenzsignal an, wobei dieses Referenzsignal vorzugsweise einstellbar ist. Dies hat den Vorteil, dass das zu überwachende Verbrauchersignal im Bezug auf ein beliebig einstellbares Referenzsignal überwacht werden kann. Bspw. kann durch eine derartige Schaltungsanordnung überwacht werden, ob das Verbrauchersignal über oder unter einem beliebig gewählten Referenzsignal liegt. Insbesondere ist vorteilhaft, dass die Referenzspannung einstellbar ist, weil dadurch das Referenzsignal an verschiedene Verbraucher angepasst werden kann. Darüberhinaus kann das Referenzsignal auch an verschiedene Betriebszustände des Verbrauchers angepasst werden. Dadurch lässt sich eine besonders zuverlässige und an jeden Betriebszustand angepasste Überwachung des Verbrauchers erreichen. Die Referenzspannung, insbesondere die regelbare Referenzspannung, kann dabei bspw. durch eine Spannungsquelle, einen Spannungsteiler oder eine Stromquelle mit angeschlossenem Lastwiderstand bereitgestellt werden.

In einer weiteren besonderen Ausführungsart der Erfindung ist das Referenzsignal ebenfalls ein getaktetes Signal. Vorteilhaft ist dabei, dass durch die Taktung des Referenzsignals die Leistungsaufnahme der Schaltungsanordnung weiter reduziert wird. Weiterhin ist vorteilhaft, dass bei dieser Ausgestaltung an beiden Eingängen des Komparators eine getaktete Spannung anliegt, wodurch sich eventuelle Einschwingvorgänge gegenseitig kompensieren.

Bei einer weiteren besonderen Ausführungsart der Erfindung handelt es sich bei dem Komparator um einen Fenster-Komparator, bei dem an zwei zweiten Eingängen zwei unterschiedliche Referenzspannungen anliegen. Dies hat den Vorteil, dass das zu überwachende Verbrauchersignal dahingehend überprüft werden kann, ob es innerhalb eines durch die beiden Referenzspannungen vorgegebenen Signalbereichs liegt.

Dadurch erhöht sich die Flexibilität der Schaltungsanordnung und es können insbesondere verschiedene Fehlerarten spezifiziert werden, die sich in unterschiedlicher Weise auf das Verbrauchersignal auswirken.

In einer weiteren besonderen Ausführungsart der Erfindung handelt es sich bei dem Verbraucher um einen induktiven Verbraucher, insbesondere um ein Ventil in einem Kraftfahrzeug, wobei das zu überwachende Verbrauchersignal der durch den Verbraucher fließende Strom ist. Vorteilhaft ist dabei, dass die erfindungsgemäße Schaltungsanordnung auch bei induktiven Verbrauchern eingesetzt werden kann. Hierdurch entfällt insbesondere der hohe schaltungstechnische Aufwand, der üblicherweise bei der Überwachung von induktiven Verbrauchern geleistet werden muss, da herkömmliche Überwachungen den Laststrom bei ausgeschaltetem Lasttreiber im Freilaufkreis detektieren, was durch die auftretende hohe Spannung, die höher als die Versorgungsspannung ist, zu technischen Problemen oder Ungenauigkeiten führt.

In einer weiteren besonderen Ausführungsart der Erfindung ist das Taktsignal pulsweitenmoduliert. Vorteilhaft ist dabei, dass durch die Pulsweitenmodulierung der Verbraucher in seiner Leistung gesteuert wird. Weiterhin ist vorteilhaft, dass die Überwachung des Verbrauchers mit der erfindungsgemäßen Schaltungsanordnung unabhängig vom Modulationsgrad erfolgt.

In einer weiteren besonderen Ausführungsart der Erfindung ist das D-Flip-Flop durch schaltungstechnische Ergänzung zu einem Master-Slave-Flip-Flop erweitert. Diese schaltungstechnische Erweiterung kann mit handelsüblichen Bauelementen, wie aus dem Stand der Technik bekannt, erfolgen. Vorteilhaft ist dabei, dass der Eingangszustand zwischengespeichert wird und erst an den Ausgang übertragen wird, wenn der Eingang durch die nächste Taktphase verriegelt ist. Dadurch wird verhindert, dass das Ausgangssignal während der aktiven Taktphase auf sich verändernde Eingangssignale reagiert. Maßgeblich für den Ausgangszustand ist der Eingangszustand am Ende der aktiven Taktphase. Dadurch werden vorteilhaft Einschwingvorgänge, wie sie insbesondere bei Kapazitiven oder induktiven Verbrauchern auftreten, wirksam unterdrückt. Der Ausgangszustand ist stabil und mindestens für eine Taktphase konstant.

Bei einer weiteren vorteilhaften Ausführungsart der Erfindung ist die Schaltungsanordnung monolithisch oder hybrid integriert. Dies hat den Vorteil, dass die Herstellungskosten reduziert und die Zuverlässigkeit der Schaltungsanordnung dadurch deutlich erhöht werden. Weiterhin ist vorteilhaft, dass die Schaltungsanordnung zusammen mit einem Steuergerät, bspw. mit einem Mikroprozessor, zusammen auf einem Bauelement integriert werden kann. Für die Integration kommt insbesondere eine monolithische Integration, bspw. in Silizium, oder eine hybride Integration, bspw. aufbauend auf einem Keramiksubstrat, in Frage.

Die Lehre der Erfindung umfasst auch die Verwendung eines D-Flip-Flops für die Überwachung eines getaktet betriebenen Verbrauchers. Hierfür kann jedes handelsübliche D-Flip-Flop so beschaltet werden, dass der Takteingang des D-Flip-Flops an das Taktsignal des Verbrauchers angelegt wird, und der Signal- oder Daten-Eingang des D-Flip-Flops direkt oder über einen Komparator mit dem zu überwachenden Signal verbunden wird. Der Vorteil dabei ist, dass das D-Flip-Flop das zu überwachende Signal jeweils nur während der aktiven Taktphasen überwacht. Darüberhinaus gelten für die erfindungsgemäße Verwendung eines D-Flip-Flops auch die Vorteile, die vorstehend zu der erfindungsgemäßen Schaltungsanordnung genannt sind.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Ein Weg zum Ausführen der beanspruchten Erfindung ist nachfolgend anhand der Zeichnungen im einzelnen erläutert.

Figur 1    zeigt die erfindungsgemäße Schaltungsanordnung mit einem Komparator und einem D-Flip-Flop.

Figur 2    zeigt einen Fenster-Komparator.

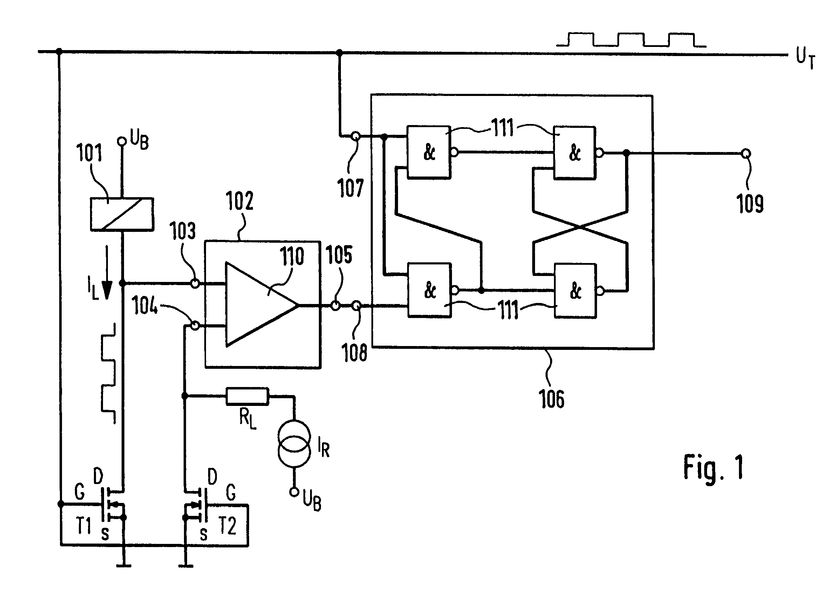

Die Figur 1 zeigt die erfindungsgemäße Schaltungsanordnung für die Überwachung eines mit einem Taktsignal UT vertriebenen Verbrauchers 101, wobei für die Überwachung ein Verbrauchersignal IL verwendet wird, gekennzeichnet durch einen Komparator 102 mit mindestens zwei Eingängen 103, 104 und einem Ausgang 105, und ein D-Flip-Flop 106 mit einem Takt-Eingang 107, einem Signaleingang 108 und einem Ausgang 109, wobei mindestens ein erster Eingang 103 des Komparators 102 mit dem Verbrauchersignal IL gekoppelt ist, und wobei der Ausgang 105 des Komparators 102 mit dem Signal-Eingang 108 des D-Flip-Flops 106 gekoppelt ist, der Takt-Eingang 107 des D-Flip-Flops 106 mit dem Taktsignal UT gekoppelt ist, und der Ausgang 109 des D-Flip-Flops 106 ein Überwachungssignal ausgibt.

Das Taktsignal UT liegt an den beiden Gate-Elektroden der beiden Transistoren T1, T2 an. Der Transistor T1 schaltet im Takt des Taktsignals UT den Verbraucher 101, der mit einer Elektrode an der Batteriespannung UB anliegt, nach Masse. Der sich einstellende getaktete Strom IL verursacht beim Fließen über die Drain/Source-Strecke des Transistors T1 einen Spannungsabfall, der das zu überwachende Verbrauchersignal repräsentiert, und der an den ersten Eingang 103 des Komparators 102 angeschlossen ist. Der Transistor T2 schaltet den Lastwiderstand RL und die damit Serie geschaltete Stromquelle IR, die mit einer Elektrode an die Batteriespannung UB angeschlossen ist, im Takt der Taktspannung UT nach Masse durch. Der sich dabei einstellende, getaktete Strom verursacht über der Drain/Source-Strecke des Transistors T2 einen Spannungsabfall, der als Referenzsignal an den zweiten Eingang 104 des Komparators 102 angeschlossen ist. Die Höhe dieses Referenzsignals lässt sich durch die Stromquelle IR einstellen. Der Komparator 102 besteht im einfachsten Fall aus einem Operationsverstärker 110. Der Ausgang 105 des Komparators 102 ist an den Eingang 108 des D-Flip-Flops 106 angeschlossen. Der Takteingang 107 des D-Flip-Flops 106 ist mit dem Taktsignal UT verbunden. Im dargestellten Beispiel ist das D-Flip-Flop aus vier NAND-Gattern 111 aufgebaut, kann aber auch mittels anderer Gatterfunktionen oder durch andere Bauelemente realisiert werden. Am Ausgang 109 des D-Flip-Flop 106 wird das Überwachungssignal ausgegeben.

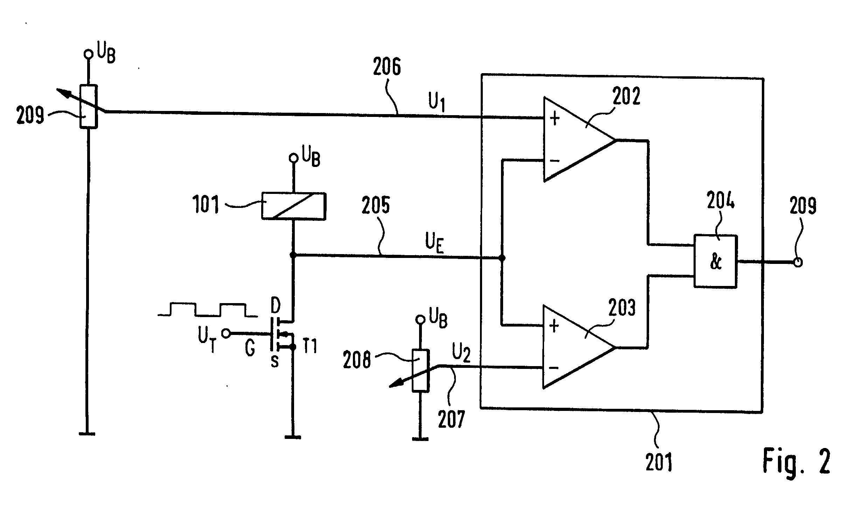

Die Figur 2 zeigt einen Fensterkomparator. Der Fensterkomparator 201 ist aufgebaut aus zwei Operationsverstärkern 202, 203, deren Ausgänge auf die Eingänge eines UND-Gatters 204 gehen. Der Ausgang des Fensterkomparators 209 ist mit dem Eingang 108 des in der Figur 1 dargestellten D-Flip-Flops 106 zu verbinden. Der erste Eingang 205 des Fensterkomparators 201 ist wiederum

mit dem Verbrauchersignal des zu überwachenden Verbrauchers 101 gekoppelt. Der Verbraucher 101 ist mit einer Elektrode an die Batteriespannung UB angeschlossen und mit der anderen Elektrode über die Drain/Source-Strecke des Transistors T1 im Takt der an der Gate-Elektrode des Transistors T1 anliegenden Taktspannung UT nach Masse geschaltet. Die beiden zweiten Eingänge 206, 207 des Fensterkomparators 201 sind jeweils mit den Schleifern zweier Potentiometer 208, 209 verbunden. Die Potentiometer sind jeweils zwischen der Batteriespannung UB und dem Massepotential geschaltet. Die Einstellung der Potentiometer ist im dargestellten Ausführungsbeispiel so gewählt, dass U1 > U2 ist.

In dem dargestellten Ausführungsbeispiel weist das Ausgangssignal 209 des Fensterkomparators 201 nur dann ein logisches Eins-Signal auf, wenn gilt:

$$U2 < UE < U1.$$

**Patentansprüche**

1. Schaltungsanordnung für die Überwachung eines mit einem Taktsignal (UT) betriebenen Verbrauchers (101), wobei für die Überwachung ein Verbrauchersignal (IL) verwendet wird, **gekennzeichnet durch** einen Komparator (102) mit mindestens zwei Eingängen (103, 104) und einem Ausgang (105), und ein D-Flip-Flop (106) mit einem Takt-Eingang (107), einem Signal-Eingang (108) und einem Ausgang (109), wobei mindestens ein erster Eingang (103) des Komparators (102) mit dem Verbrauchersignal (IL) gekoppelt ist, und wobei der Ausgang (105) des Komparators (102) mit dem Signal-Eingang (108) des D-Flip-Flops (106) gekoppelt ist, der Takt-Eingang (107) des D-Flip-Flops (106) mit dem Takt-Signal (UT) gekoppelt ist, und der Ausgang (109) des D-Flip-Flops ein Überwachungssignal ausgibt.

2. Schaltungsanordnung nach Anspruch 1, **dadurch gekennzeichnet, dass** an einem zweiten Eingang (104) des Komparators (102) ein Referenzsignal anliegt.

3. Schaltungsanordnung nach Anspruch 2, **dadurch gekennzeichnet, dass** die Referenzspannung einstellbar ist.

4. Schaltungsanordnung nach Anspruch 2 oder 3, **dadurch gekennzeichnet, dass** das Referenzsignal ebenfalls ein getaktetes Signal ist.

5. Schaltungsanordnung nach einem der Ansprüche 1 bis 4, **dadurch gekennzeichnet, dass** es sich bei dem Komparator um einen Fenster-Komparator handelt, bei dem an zwei zweiten Eingängen zwei unterschiedliche Referenzspannungen anliegen.

6. Schaltungsanordnung nach einem der Ansprüche 1 bis 5, **dadurch gekennzeichnet, dass** es sich bei dem Verbraucher (101) um einen induktiven Verbraucher handelt, insbesondere um ein Ventil in einem Kraftfahrzeug, und dass das zu überwachende Verbrauchersignal der durch den Verbraucher fließende Strom (IL) ist.

7. Schaltungsanordnung nach einem der Ansprüche 1 bis 6, **dadurch gekennzeichnet, dass** das Taktsignal (UT) pulsweitenmoduliert ist.

8. Schaltungsanorndung nach einem der Ansprüche 1 bis 7, **dadurch gekennzeichnet, dass** das D-Flip-Flop (106) durch schaltungstechnische Ergänzung zu einem Master-Slave-Flip-Flop erweitert ist.

9. Schaltungsanordnung nach einem der Ansprüche 1 bis 8, **dadurch gekennzeichnet, dass** die Schaltungsanordnung monolytisch oder hybrid integriert ist.

10. Verwendung einer Schaltungsanordnung gemäß einem der Ansprüche 1-9 für die Überwachung eines getaktet-betriebenen Verbrauchers.

**Claims**

1. Circuit arrangement for the monitoring of a load (101) operated with a clock signal (UT), a load signal (IL) being used for the monitoring, **characterized by** a comparator (102) having at least two inputs (103, 104) and an output (105), and a D-type flip-flop (106) having a clock input (107), a signal input (108) and an output (109), at least a first input (103) of the comparator (102) being coupled to the load signal (IL), and the output (105) of the comparator (102) being coupled to the signal input (108) of the D-type flip-flop (106), the clock input (107) of the D-type flip-flop (106) being coupled to the clock signal (UT), and the output (109) of the D-type flip-flop outputting a monitoring signal.

2. Circuit arrangement according to Claim 1, **characterized in that** a reference signal is present at a second input (104) of the comparator (102).

3. Circuit arrangement according to Claim 2, **characterized in that** the reference voltage can be set.

4. Circuit arrangement according to Claim 2 or 3, **characterized in that** the reference signal is likewise a clocked signal.

5. Circuit arrangement according to one of Claims 1 to 4, **characterized in that** the comparator is a window comparator in which two different reference voltages are present at two second inputs.

6. Circuit arrangement according to one of Claims 1 to 5, **characterized in that** the load (101) is an inductive load, in particular a valve in a motor vehicle, and **in that** the load signal to be monitored is the current (IL) flowing through the load.

7. Circuit arrangement according to one of Claims 1 to 6, **characterized in that** the clock signal (UT) is pulse-width-modulated.

8. Circuit arrangement according to one of Claims 1 to 7, **characterized in that** the D-type flip-flop (106) is extended by circuitry supplementation to form a master-slave flip-flop.

9. Circuit arrangement according to one of Claims 1 to 8, **characterized in that** the circuit arrangement is integrated monolithically or in hybrid fashion.

10. Use of a circuit arrangement according to one of Claims 1-9 for the monitoring of a clocked-operated load.

**Revendications**

1. Circuit pour le contrôle d'un consommateur (101) alimenté avec un signal cadencé (UT), dans lequel on utilise pour le contrôle un signal de consommateur (IL),
**caractérisé par**
un comparateur (102) comprenant au moins deux entrées (103, 104) et une sortie (105), et une bascule D (106) avec une entrée cadencée (107), une entrée de signal (108) et une sortie (109), au moins une première entrée (103) du comparateur (102) étant couplée au signal de consommateur (IL), et dans lequel la sortie (105) du comparateur (102) est couplée à l'entrée de signal (108) de la bascule D (106), l'entrée cadencée (107) de la bascule D (106) est couplée au signal cadencé (UT) et la sortie (109) de la bascule D émet un signal de contrôle.

2. Circuit selon la revendication 1, **caractérisé en ce qu'** un signal de référence est présent à une deuxième entrée (104) du comparateur (102).

3. Circuit selon la revendication 2, **caractérisé en ce que** la tension de référence est réglable.

4. Circuit selon la revendication 2 ou 3, **caractérisé en ce que** le signal de référence est également un signal cadencé.

5. Circuit selon l'une quelconque des revendications 1 à 4, **caractérisé en ce que** le comparateur est un comparateur à fenêtre, dans lequel deux tensions de référence différentes sont présentes à deux deuxièmes entrées.

6. Circuit selon l'une quelconque des revendications 1 à 5, **caractérisé en ce que** le consommateur (101) est un consommateur inductif, en particulier une soupape dans un véhicule automobile, et le signal de consommateur à contrôler est le courant (IL) circulant à travers le consommateur.

7. Agencement de circuit selon l'une quelconque des revendications 1 à 6, **caractérisé en ce que** le signal cadencé (UT) est modulé en largeur d'impulsion.

8. Agencement de circuit selon l'une quelconque des revendications 1 à 7, **caractérisé en ce que** la bascule D (106) est élargie en une bascule maître-esclave par un complément relevant de la technique des circuits.

9. Agencement de circuit selon l'une quelconque des revendications 1 à 8, **caractérisé en ce que** le circuit est intégré de manière monolithique ou hybride.

10. Utilisation d'un circuit selon l'une quelconque des revendications 1 à 9, pour le contrôle d'un consommateur alimenté de façon cadencée.

Fig. 1

EP 0 934 860 B1

Fig. 2

EP 0 934 860 B1